## Europäisches Patentamt
## European Patent Office
## Office européen des brevets

(19)

(11) Numéro de publication **0 199 649**
**B1**

(12)

# FASCICULE DE BREVET EUROPEEN

(45) Date de publication du fascicule du brevet:
**22.03.89**

(51) Int. Cl.⁴: **C 03 C 17/00, C 03 B 18/16**

(21) Numéro de dépôt: **86400851.1**

(22) Date de dépôt: **21.04.86**

(54) **Revêtement du verre fabriqué dans une installation de flottage par des composés pyrolysables en poudre.**

(30) Priorité: **24.04.85 FR 8506242**

(43) Date de publication de la demande:
**29.10.86 Bulletin 86/44**

(45) Mention de la délivrance du brevet:
**22.03.89 Bulletin 89/12**

(84) Etats contractants désignés:
**AT BE CH DE FR GB IT LI LU NL SE**

(56) Documents cités:
**EP-A- 0 025 738**
**FR-A- 2 210 675**

(73) Titulaire: **SAINT-GOBAIN VITRAGE, Les Miroirs 18, avenue d'Alsace, F-92400 Courbevoie (FR)**

(72) Inventeur: **Fremaux, Jacques, 1 bis, rue C. Monet, F-78380 Bougival (FR)**
Inventeur: **Villain, Jean-Marie, 14, rue Gambetta, F-59234 Monchecourt (FR)**

(74) Mandataire: **Leconte, Jean-Gérard et al, Saint-Gobain Recherche 39, Quai Lucien Lefranc, F-93304 Aubervilliers Cedex (FR)**

ACTORUM AG

## Description

La présente invention concerne le revêtement d'un ruban de verre à la sortie d'une installation de flottage, par une couche mince d'oxyde métallique résultant de la pyrolyse de composés en poudre.

Il est connu par le brevet français publié sous le n° 2 542 636 de projeter à l'aide d'une buse de projection sur un ruban de verre en mouvement, à la sortie d'une installation de flottage, une poudre de composés métalliques décomposables à la chaleur.

Il est également connu de mettre en oeuvre des moyens d'aspiration dans l'environnement de la zone de projection de poudre pour éliminer le surplus de poudre non fixée sur le verre, ainsi que les déchets résultant de la pyrolyse de la poudre au contact du verre.

La demande de brevet français FR-A-2575679 déposée le 7 janvier 1985 propose sur ce sujet des réalisations particulières dans lesquelles les moyens d'aspiration sont associés à des moyens de soufflage. Ces moyens d'aspiration et de soufflage sont conformés et disposés de façon à produire leurs effets dans la zone de distribution de la poudre, ces effets consistants essentiellement en la formation de tourbillons de la poudre non immédiatement fixée sur le verre à la sortie de la buse, avant sa captation et son évacuation par les moyens d'aspiration, en même temps que les déchets de décomposition. Ainsi grâce à cette pluralité de passage de la poudre devant le verre fournie par les tourbillons, les chances de dépôt de poudre sur le verre sont augmentées, ce qui accroît le rendement de l'opération de revêtement.

Avec une telle installation ayant au moins une buse de projection, des moyens d'aspiration, on obtient des substrats correctement revêtus, mais à condition cependant de fonctionner avec des poudres ayant une granulométrie bien précise. Si au contraire, il existe des grains de poudre **plus gros** que prévu, ou si des grains initialement convenables se réagglomèrent pour former des amas, ceux-ci projetés par la buse, ont **une telle énergie qu'ils peuvent** dépasser les limites de la zone de dépôt et s'approcher de la sortie de l'enceinte de flottage où brûle l'hydrogène qui s'échappe de ladite enceinte.

On sait en effet que dans la fabrication du verre par flottage, le verre est coulé sur un bain d'étain à l'abri de l'oxydation grâce à une atmosphère protectrice constituée de préférence d'azote enrichi en hydrogène. Pour éviter l'entrée d'air au dessus du bain d'étain, l'atmosphère protectrice d'azote et d'hydrogène est en légère surpression et des rideaux étanches, généralement au moins au nombre de trois, barrent la sortie de l'enceinte de flottage au dessus du ruban de verre qu'on extrait de l'enceinte. Compte tenu de la légère surpression, des gaz s'échappent de l'enceinte de flottage, entre les rideaux et le ruban de verre et sous ledit ruban, et ces gaz sont enflammés après le dernier rideau c'est à dire celui disposé le plus en aval.

Sous la chaleur des flammes à la sortie de l'enceinte de flottage, les gros grains ou les amas de poudre sont détruits en un temps très court et ils forment alors une tâche sur le verre, le rendant non commercialisable.

La présente invention vise à éviter la formation de ces tâches dues à une destruction rapide, au contact des flammes à la sortie de l'enceinte de flottage, des grains trop gros et amas de poudre de composés métalliques.

Elle vise également à permettre le fonctionnement d'une installation de revêtement de verre flotté à l'aide de poudres de composés métalliques décomposables en oxydes à la chaleur, poudre pour lesquelles les contraintes de granulométrie sont moins strictes.

Pour cela il est évidemment possible d'éloigner la flamme qui se forme à la sortie de l'enceinte de flottage en relevant le dernier rideau d'étanchéité à la sortie de ladite enceinte et éventuellement l'avant dernier, afin que la flamme se forme à la base d'un rideau plus en amont, mais on risque ainsi de perturber le fonctionnement de l'installation de flottage.

Il est également possible de souffler des gaz à la limite de la zone de distribution de la poudre, du côté de l'enceinte de flottage, en direction de l'intérieur de la zone de distribution de poudre de façon à former une barrière vis à vis des gros grains et des amas de poudre; mais ces barrières de gaz pourraient perturber la distribution de poudre, en particulier les tourbillons prévus selon la demande de brevet FR-A-2575679 déjà citée.

La présente invention vise à éviter les défauts de revêtement du verre dûs à la rencontre des grains de poudre distribués sur le verre et des flammes à la sortie de l'enceinte de flottage, sans pour cela perturber la distribution de poudre elle-même ou la fabrication du verre dans l'enceinte de flottage.

Elle propose pour cela de réaliser une décompression en sortie de l'enceinte de flottage dans au moins un sas situé en aval d'au moins un autre sas, en pratiquant des ouvertures dans les parois du sas à décompresser.

Dans un mode de réalisation avantageux le sas concerné est celui situé le plus en aval, dans le sens de défilement du ruban de verre, à la sortie de l'enceinte de flottage.

De préférence ces ouvertures sont pratiquées dans les parois latérales du sas.

Grâce à cette mesure, l'effet de sas bien qu'affaibli est cependant préservé et l'influence sur le fonctionnement de l'enceinte de flottage est insignifiante et sans conséquence. Il en résulte que les flammes en sortie de l'anceinte de flottage sont fortement réduites et que la destruction brutale dans lesdites flammes des gros grains ou des amas de poudre projetés par la buse, a beaucoup moins de chance de se produire.

Avantageusement l'invention propose en outre d'éteindre les flammes à la sortie du dernier rideau d'étanchéité, flammes qui sont déjà affaiblies par la décompression, en soufflant en direction de la base de ce dernier rideau un gaz antiflamme, les flammes allant alors se fixer à la base du rideau précédent.

Ce soufflage d'un gaz antiflamme peut à lui seul éteindre les flammes de sortie de l'enceinte de flottage à la base du dernier rideau, celles-ci se déplaçant alors à la base du rideau précédent. Cependant la combinaison des deux mesures permet d'atteindre le but fixé avec plus de certitude.

L'invention propose également une installation de revêtement par des oxydes métalliques, d'un ruban de verre sortant d'une enceinte de flottage, dans laquelle des ouvertures de tailles réduites sont pratiquées au travers des parois d'au moins un sas en aval d'au moins un autre sas, la taille desdites ouvertures étant suffisamment réduite pour que la baisse de surpression causée par ces ouvertures ne soit pas préjudiciable au fonctionnement de l'enceinte de flottage.

Avantageusement c'est le dernier sas qui est muni de telles ouvertures.

En addition à cette mesure consistant à pratiquer des ouvertures dans les parois du sas, on prévoit au moins une rampe de soufflage d'un gaz antiflamme vers la base du dernier rideau d'étanchéité.

Les sas modifiés de sortie de l'enceinte de flottage peuvent demeurer ainsi modifiés même en l'absence de revêtement du ruban de verre, la fabrication dudit ruban de verre n'étant par altérée.

L'invention concerne donc également une enceinte de flottage enfermant une atmosphère réductrice d'azote et d'hydrogène en légère surpression dont la sortie comporte des sas séparés par des rideaux d'étanchéité disposés transversalment par rapport à la direction de défilement du ruban de verre, dans laquelle au moins un sas en aval d'au moins un autre sas comporte des ouvertures de taille réduite pratiquées dans ses parois, la taille desdites ouvertures étant suffisamment réduite pour que la baisse de surpression causée par ces ouvertures ne soit pas préjudiciable au fonctionnement de l'enceinte de flottage.

L'invention sera maintenant décrite plus en détail en référence aux figures jointes qui représentent:

figure 1: un schéma d'ensemble d'une installation classique de revêtement par des oxydes métalliques à l'aide de composés en poudre, d'un ruban de verre fabriqué par flottage sur un bain métallique en fusion,

figure 2: une vue de dessus des modifications de l'installation selon la figure 1, réalisées pour mettre en oeuvre l'invention,

figure 3: une vue de profil des modifications proposées par l'invention.

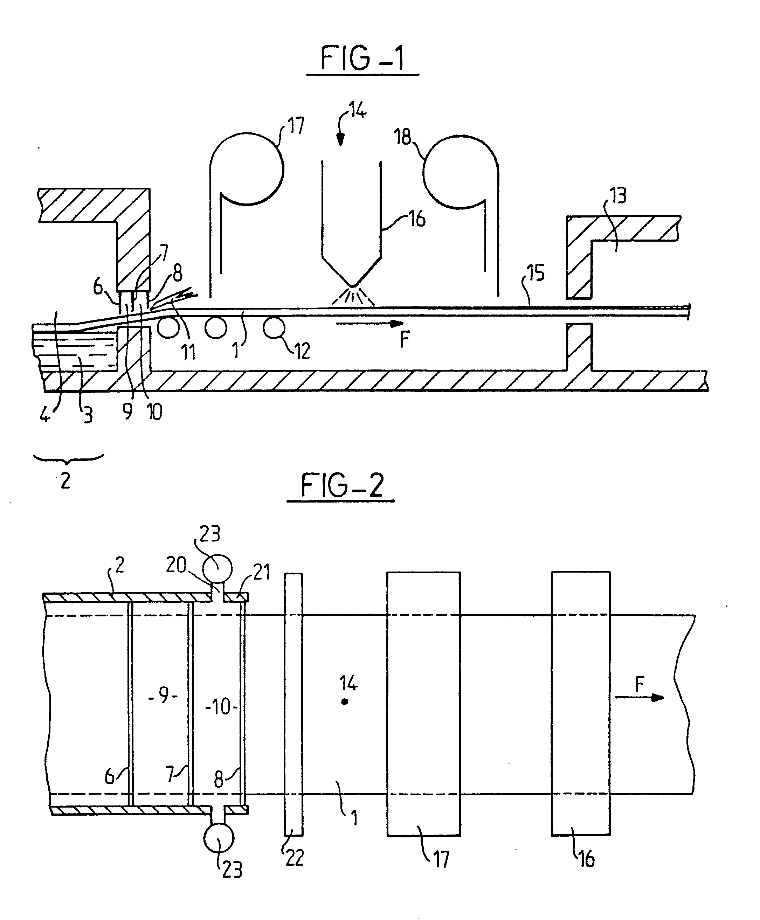

La figure 1 montre un schéma d'une installation classique de revêtement d'un ruban de verre 1 par des oxydes métalliques, à sa sortie d'une enceinte de flottage 2 renfermant un bain d'étain fondu 3.

L'atmosphère dans le volume 4 surplombant le bain d'étain 3 et la nappe de verre qui s'étale à sa surface, est consituée par un mélange réducteur d'azote et d'hydrogène. Pour éviter toute entrée d'air extérieur susceptible d'oxyder le bain d'étain 3, une légère surpression de l'atmosphère réductrice est maintenue dans le volume 4 et des rideaux d'étanchéité, généralement au moins trois, 6, 7, 8, délimitant entre eux deux sas 9 et 10, sont prévus pour barrer la sortie de l'enceinte 2 au dessus du ruban de verre 1.

A la base du rideau 8 le plus en aval dans le sens de défilement du ruban de verre 1 marqué par la flèche F, l'hydrogène qui fuit sous les rideaux 6, 7 et 8 brûle en une flamme 11.

Le ruban de verre 1 est transporté dès sa sortie de l'enceinte 2, sur des rouleaux tels que 12. Il est ainsi acheminé par exemple dans un four de recuisson 13.

Entre la sortie de l'enceite 2 et le four de recuisson 13 est réservée une zone 14 dans laquelle s'effectue le revêtement du verre par une couche d'oxyde métallique 15.

Cette couche 15 est obtenue par décomposition sous l'effet de chaleur, de composés métalliques en poudre du type oxyde de dibutyl étain (DBTO), difluorure de dibutyl étain (DBTF), formiate d'indium, etc... ou des mélanges de ces composés, distribués par une buse 16 du type de celles déscrites dans le document de brevet européen n° 0 125 153. Les excédents de poudre non captée par le verre et les résidus de décomposition de la poudre sont aspirés par des moyens d'extraction 17, 18 disposés au moins en amont de la buse 16.

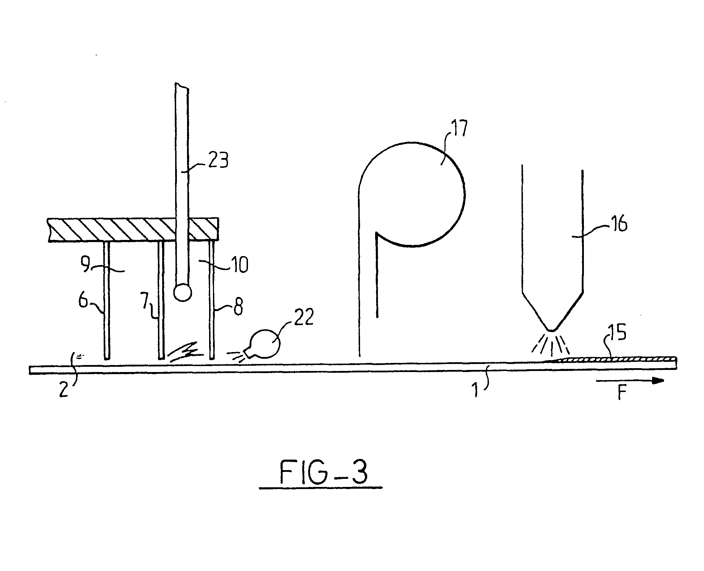

Dans une installation de revêtement de verre de ce type, c'est à dire distribuant des composés en poudre sur du verre élaboré par flottage, l'invention propose comme montré sur les figures 2 et 3 de percer une ou plusieurs ouvertures telles que 20 dans les parois du sas 10, c'est à dire le plus aval en considérant le sens de déplacement du verre, mettant ledit sas en communication avec l'extérieur et faisant ainsi en sorte que la légère surpression qui y règne soit réduite. De préférence, comme montré sur la figure 2, c'est dans les parois latérales 21 du sas 10 que sont pratiquées ces ouvertures; leur taille est suffisamment réduite pour que l'on n'observe qu'une baisse de la surpression qui ne soit pas préjudiciable au fonctionnement correct de l'installation de flottage.

Avantageusement pour ne pas introduire de dissymétire susceptible d'altérer le ruban de verre, les ouvertures 20 seront pratiquées de chaque côté du sas dans ses parois latérales.

Deux ouvertures pratiquées chacune à une extrémité latérale, de l'ordre de 100 cm² de surface conviendront.

Grâce à cette mesure, la pression du gaz qui fuit sous le rideau d'étanchéité 8 est un peu plus faible et par conséquent la flamme 11 est moins importante.

Il en résulte que beaucoup moins de particules de composés métalliques s'y brûlent et donc la qualité du revêtement 15 est très améliorée.

En outre, on peut prévoir des moyens supplémentaires qui éteignent la flamme 11 et la font s'allumer à la base du rideau 7, à l'intérieur du sas 10.

Ces moyens comportent au moins une rampe 22 de soufflage d'un gaz antiflamme tel que l'azote, disposée à proximité de la base du rideau 8. De préférence, cette rampe 22 est dans la zone de revêtement 14 et ses orifices de soufflage, fente unique ou multiple ou trous espacés, sont orientés de façon à diriger le gaz antiflamme au moins vers la base du rideau 8, ainsi par exemple orientés approximativement à 45° par rapport à la verticale.

Sous l'effet de ce gaz antiflamme, la flamme 11 déjà affaiblie par la décompression du sas 10, s'éteint et se transporte à l'intérieur du sas, à la base du rideau 7 qui précède le rideau 8 à la base duquel la flamme était intialement allumée.

Pour évacuer les gaz de combustion, les ouvertures 20 dans les parois du sas 10 sont alors avantageusement reliées à des cheminées 23.

Grâce à ce soufflage additionnel, plus aucune particule du composé métallique distribué par la buse 16 ne vient brûler dans la flamme en sortie de l'enceinte de flottage, ces particules étant avant tout arrêtées par le rideau 8 et ayant de toute façon une distance trop importante à franchir pour atteindre la nouvelle flamme.

Le débit de gaz antiflamme peut être aussi faible qu'environ 100 à 300 Nm³ par heure pour toute la largeur d'une installation de flottage (3,50 m environ). Du fait de ce faible débit, la faible perturbation de température subie par le ruban de verre ne porte pas préjudice à l'opération de revêtement.

L'invention s'applique particulièrement bien à l'installation de revêtement décrite dans la demande de brevet français FR-A-2575679 déjà citée, dans laquelle le soufflage et l'aspiration dans la zone de revêtement 14, sont organisés de façon à créer avant et/ou après la buse 16, des tourbillons dans lesquels sont entraînés les grains de poudre non immédiatement captés par le verre. Ces tourbillons ont normalement tendance à aspirer la flamme 11 dans la zone de revêtement; grâce à l'invention, en particulier dans le cas où la flamme est générée à l'intérieur du sas 10, à la base du rideau 7, ladite flamme est insensible à l'aspiration créée par les tourbillons.

Bien entendu, l'invention s'applique aussi à toute autre installation, même sans tourbillons, à partir du moment où est posé le problème de la distribution de poudre sur un ruban de verre fabriqué dans une installation de flottage.

Dans l'invention décrite, c'est au niveau du dernier sas qu'à été partiquée la décompression; cependant il est également possible d'intervenir sur l'avant dernier sas, ou même un sas situé plus en amont dans la mesure où il est lui-même séparé de l'intérieur de l'enceinte de flottage par au moins un autre sas.

La décompression réalisée dans un sas se répercute sur tous les sas en aval.

Il est également possible de mettre en oeuvre le soufflage d'un gaz antiflamme seul. Cependant pour plus de stabilité de la flamme au niveau de l'avant dernier rideau, il est préférable de combiner les deux mesures.

## Revendications

1. Procédé de revêtement par une couche mince d'oxyde métallique résultant de la pyrolyse de composés en poudre, d'un ruban de verre élaboré dans une enceinte de flottage enfermant une atmosphère réductrice d'azote et d'hydrogène en légère surpression, dont la sortie comporte des sas séparés par des rideaux d'étanchéité disposés transversalement par rapport à la direction de défilement du ruban de verre, caractérisé en ce qu'on réalise une décompression d'au moins un sas situé en aval d'au moins un autre sas, grâce à des ouvertures pratiquées dans les parois dudit sas à décompresser.

2. Procédé selon la revendication 1, caractérisé en ce qu'on décompresse le sas situé le plus en aval.

3. Procédé selon la revendication 2, caractérisé en ce qu'on éteint la flamme qui brûle l'hydrogène qui fuit de l'installation de flottage, à la base du rideau le plus en aval, par soufflage d'un gaz antiflamme, notamment de l'azote, sur la base dudit rideau, ladite flamme se générant alors à l'intérieur du sas décompressé, à la base de l'avant dernier rideau.

4. Procédé selon. la revendication 3, caractérisé en ce qu'on évacue les gaz de combustion de la flamme générée à l'intérieur du sas, par les ouvertures pratiquées dans les parois dudit sas.

5. Procédé de revêtement par une couche mince d'oxyde métallique résultant de la pyrolyse de composés en poudre, d'un ruban de verre élaboré dans une enceinte de flottage enfermant une atmosphère réductrice d'azote et d'hydrogène en légère surpression, dont la sortie comporte des sas séparés par des rideaux d'étanchéité disposés transversalement par rapport à la direction de défilement du ruban de verre, caractérisé en ce qu'on éteint la flamme qui brûle l'hydrogène qui fuit de l'installation de flottage, à la base du rideau le plus en aval, par soufflage d'un gaz antiflamme, notamment de l'azote, sur la base dudit rideau, ladite flamme se générant alors à la base de l'avant dernier rideau.

6. Installation de revêtement par une couche mince d'oxyde métallique résultant de la pyrolyse de composés en poudre, d'un ruban de verre élaboré dans une enceinte de flottage enfermant une atmosphère réductrice d'azote et d'hydrogène en légère surpression, dont la sortie comporte des sas séparés par des rideaux d'étanchéité disposés transversalement par rapport à la direction de défilement du ruban de verre, caractérisé en ce qu'elle comporte des ouvertures de taille réduite, pratiquées dans les parois d'au moins un sas en aval d'au moins un autre sas, à la sortie de l'enceinte de flottage, la taille desdites ouvertures étant suffisamment réduite pour que la baisse de surpression causée par ces ouvertures ne soit pas préjudiciable au fonctionnement de l'enceinte de flottage.

7. Installation selon la revendication 6, caractérisée en ce que les ouvertures sont pratiquées dans les parois du sas le plus en aval.

8. Installation selon l'une des revendications 6 ou 7, caractérisée en ce que les ouvertures sont pratiquées au travers des extrémités latérales du sas.

9. Installation selon l'une des revendications 6 à 8, caractérisée en ce qu'elle comporte au moins une rampe de gaz antiflamme qui souffle du gaz antiflamme, azote notamment, en direction de la base du dernier rideau en aval du dernier sas en sortie de l'enceinte de flottage.

10. Installation selon la revendication 9, caractérisée en ce que des cheminées sont branchées sur les ouvertures pratiquées dans les parois du dernier sas.

11. Installation de revêtement par une couche mince d'oxyde métallique résultant de la pyrolyse de composés en poudre, d'un ruban de verre élaboré dans une enceinte de flottage enfermant une atmosphère réductrice d'azote et d'hydrogène en légère surpression, dont la sortie comporte des sas séparés par des rideaux d'étanchéité disposés transversalement par rapport à la direction de défilement du ruban de verre, caractérisé en ce qu'elle comporte au moins une rampe de gaz antiflamme, azote notamment, en direction de la base du dernier rideau en aval du dernier sas en sortie de l'enceinte de flottage.

12. Enceinte de flottage enfermant une atmosphère réductrice d'azote et d'hydrogène en légère surpression dont la sortie comporte des sas séparés par des rideaux d'étanchéité disposés transversalement par rapport à la direction de défilement du ruban de verre, caractérisée en ce qu'elle comporte au moins un sas en aval d'au moins un autre sas, équipé d'ouvertures de taille réduite dans ses parois, la taille desdites ouvertures étant suffisamment réduite pour que la baisse de surpression causée par ces ouvertures ne soit pas préjudiciable au fonctionnement de l'enceinte de flottage.

13. Enceinte de flottage selon la revendication 12, caractérisé en ce que les ouvertures sont pratiquées dans les parois du sas le plus en aval.

14. Enceinte selon l'une des revendications 12 à 13, caractérisé en ce que les ouvertures sont pratiquées au travers des extrémités latérales du sas.

**Patentansprüche**

1. Verfahren zum Überziehen eines Glasbandes, das in einer Floatkammer hergestellt worden ist, die eine reduzierende Atmosphäre aus Stickstoff und Wasserstoff unter geringem Überdruck enthält, mit einer dünnen Schicht aus Metalloxid, das durch Pyrolyse pulverförmiger Verbindungen erhalten worden ist, wobei der Ausgang der Floatkammer Schleusenkammern umfasst, die durch Dichtungsvorhänge getrennt sind, die quer zur Durchlaufrichtung des Glasbandes angeordnet sind, dadurch gekennzeichnet, daß man in mindestens einer Schleusenkammer, die stromabwärts mindestens einer anderen Schleusenkammer angeordnet ist, mittels in die Wandungen der genannten einen Schleusenkammer eingebrachten Öffnungen eine Druckverminderung vornimmt.

2. Verfahren nach Anspruch 1, dadurch gekennzeichnet, daß man die Druckverminderung in der am weitesten stromabwärts gelegenen Schleusenkammer vornimmt.

3. Verfahren nach Anspruch 2, dadurch gekennzeichnet, daß man die Flamme, die den Wasserstoff verbrennt, der aus der Floatanlage austritt, am unteren Teil des am meisten stromabwärts gelegenen Vorhanges löscht, indem man ein flammlöschendes Gas, insbesondere Stickstoff, auf das untere Teil des genannten Vorhanges bläst, wobei sich die Flamme dann im Inneren der druckverminderten Schleusenkammer am unteren Teil des vorletzten Vorhanges ausbildet.

4. Verfahren nach Anspruch 3, dadurch gekennzeichnet, daß man die Verbrennungsgase der Flamme, die sich im Inneren der Schleusenkammer gebildet hat, durch in die Wandungen der genannten Schleusenkammer eingebrachte Öffnungen evakuiert.

5. Verfahren zum Überziehen eines Glasbandes, das in einer Floatkammer hergestellt worden ist, die eine reduzierende Atmosphäre aus Stickstoff und Wasserstoff unter geringem Überdruck enthält, mit einer dünnen Schicht aus Metalloxid, das durch Pyrolyse pulverförmiger Verbindungen erhalten worden ist, wobei der Ausgang der Floatkammer Schleusenkammern umfaßt, die durch Dichtungsvorhänge getrennt sind, die quer zur Durchlaufrichtung des Glasbandes angeordnet sind, dadurch gekennzeichnet, daß man die Flamme, die den Wasserstoff verbrennt, der aus der Floatanlage austritt, am unteren Teil des am meisten stromabwärts gelegenen Vorhanges löscht, indem man ein flammlöschendes Gas, insbesondere Stickstoff, auf das untere Teil des genannten Vorhanges bläst, wobei sich die Flamme dann im Inneren der druckverminderten Schleusenkammer an unteren Teil des vorletzten Vorhanges ausbildet.

6. Vorrichtung zum Überziehen eines Glasbandes, das in einer Floatkammer hergestellt worden ist, die eine reduzierende Atmosphäre aus Stickstoff und Wasserstoff unter geringem Überdruck enthält, mit einer dünnen Schicht aus Metalloxid, das durch Pyrolyse pulverförmiger Verbindungen erhalten worden ist, wobei der Ausgang der Floatkammer Schleusenkammern umfaßt, die durch Dichtungsvorhänge getrennt sind, die quer zur Durchlaufrichtung des Glasbandes angeordnet sind, dadurch gekennzeichnet, daß die Vorrichtung Öffnungen geringer Grösse umfaßt, die in die Wandungen mindestens einer Schleusenkammer eingebracht sind, die stromabwärts mindestens einer anderen Schleusenkammer am Ausgang der Floatkammer angeordnet ist, wobei die Größe der genannten Öffnungen ausreichend gering ist, damit die durch die Öffnungen verursachte Verminderung des Überdruckes das Funktionieren der Floatkammer nicht nachteilig beeinflußt.

7. Vorrichtung nach Anspruch 6, dadurch gekennzeichnet, daß die Öffnungen in die Wandungen der am meisten stromabwärts gelegenen Schleusenkammer eingebracht sind.

8. Vorrichtung nach einem der Ansprüche 6 oder 7, dadurch gekennzeichnet, daß die Öffnungen durch die seitlichen Enden der Schleusenkammer eingebracht sind.

9. Vorrichtung nach einem der Ansprüche 6 bis 8, dadurch gekennzeichnet, daß sie mindestens eine Leitung für flammlöschendes Gas umfaßt, die flammlöschendes Gas, insbesondere Stickstoff, in Richtung des unteren Teiles des letzten Vorhanges stromabwärts der letzten Schleusenkammer am Ausgang der Floatkammer bläst.

10. Vorrichtung nach Anspruch 9, dadurch gekennzeichnet, daß Abzugsrohre an die in die Wandungen der letzten Schleusenkammer eingebrachten Öffnungen angeschlossen sind.

11. Verfahren zum Überziehen eines Glasbandes, das in einer Floatkammer hergestellt worden ist, die eine reduzierende Atmosphäre aus Stickstoff und Wasserstoff unter geringem Überdruck enthält, mit einer dünnen Schicht aus Metalloxid, das durch Pyrolyse pulverförmiger Verbindungen erhalten worden ist, wobei der Ausgang der Floatkammer Schleusenkammern umfaßt, die durch Dichtungsvorhänge getrennt sind, die quer zur Durchlaufrichtung des Glasbandes angeordnet sind, dadurch gekennzeichnet, daß sie mindestens eine Leitung für flammlöschendes Gas, insbesondere Stickstoff, in Richtung des unteren Teiles des letzten Vorhanges stromabwärts der letzten Schleusenkammer am Ausgang der Floatkammer umfaßt.

12. Floatkammer, die eine reduzierende Atmosphäre aus Stickstoff und Wasserstoff unter geringem Überdruck enthält, deren Ausgang Schleusenkammern umfaßt, die durch Dichtungsvorhänge getrennt sind, die quer zur Durchlaufrichtung des Glasbandes angeordnet sind, dadurch gekennzeichnet, daß sie mindestens eine Schleusenkammer umfaßt, die stromabwärts mindestens einer anderen Schleusenkammer angeordnet ist, die mit Öffnungen geringer Größe in ihren Wandungen versehen ist, wobei die Größe der genannten Öffnungen ausreichend gering ist, damit die durch die Öffnungen verursachte Verminderung des Überdruckes das Funktionieren der Floatkammer nicht nachteilig beeinflußt.

13. Floatkammer nach Anspruch 12, dadurch gekennzeichnet, daß die Öffnungen in die Wandungen der am meisten stromabwärts gelegenen Schleusenkammer eingebracht sind.

14. Floatkammer nach einem der Ansprüche 12 und 13, dadurch gekennzeichnet, daß die Öffnungen durch die seitlichen Enden der Schleusenkammer eingebracht sind.

## Claims

1. A method of coating, with a thin layer of metallic oxide resulting from the pyrolysis of compounds in powder form, a band of glass produced in a float enclosure containing a reducing atmosphere of nitrogen and hydrogen at slight overpressure, the outlet from which enclosure comprises locks separated from one another by sealing curtains disposed transversely to the direction of movement of the glass band, characterized in that a decompression is produced of at least one lock situated downstream of at least one other lock, by means of openings formed in the walls of said lock to be decompressed.

2. A method according to claim 1, characterized in that the lock situated furthest downstream is decompressed.

3. A method according to claim 2, characterized in that the flame which burns off the hydrogen escaping from the float installation at the base of the curtain furthest downstream is extinguished by blowing an anti-flame gas, notably nitrogen, onto the base of said curtain, said flame being then produced inside the decompressed lock at the base of the penultimate curtain.

4. A method according to claim 3, characterized in that the combustion gases of the flame generated inside the lock are evacuated through openings formed in the walls of said lock.

5. A method of coating, with a thin layer of metallic oxide resulting from the pyrolysis of compounds in powder form, a band of glass produced in a float enclosure containing a reducing atmosphere of nitrogen and hydrogen at slight overpressure, the outlet from which enclosure comprises locks separated from one another by sealing curtains disposed transversely to the direction of movement of the glass band, characterized in that the flame which burns off the hydrogen escaping from the float installation at the base of the curtain situated furthest downstream is extinguished by blowing of an anti-flame gas, notably nitrogen, onto the base of said curtain, said flame then being produced at the base of the penultimate curtain.

6. Apparatus for coating, with a thin layer of metallic oxide resulting from the pyrolysis of compounds in powder form, a band of glass produced in a float enclosure containing a reducing atmosphere of nitrogen and hydrogen at slight overpressure, the outlet from which comprises locks separated from one another by sealing curtains disposed transversely to the direction of travel of the glass band, characterized in that the apparatus comprises openings of small size formed in the walls at least one lock downstream of at least one other lock, at the outlet from the float enclosure, the size of said opening being sufficiently small for the reduction in overpressure caused by these openings not to be prejudicial to the functioning of the float enclosure.

7. Apparatus according to claim 6, characterized in that the openings are formed in the walls of the lock furthest downstream.

8. Apparatus according to one of claims 6 or 7, characterized in that the openings are formed through the lateral ends of the lock.

9. Apparatus according to one of claims 6 to 8, characterized in that it comprises at least one nozzle pipe for anti-flame gas which blows anti-flame gas, notably nitrogen, towards the base of the last curtain downstream of the last lock at the outlet from the float enclosure.

10. Apparatus according to claim 9, characterized in that chimneys are connected to the openings formed in the walls of the last lock.

11. Apparatus for coating, with a thin layer of metallic oxide resulting from the pyrolysis of compounds in powder form, a band of glass produced in a float enclosure containing a reducing atmosphere of nitrogen and hydrogen at slight overpressure, the outlet from which comprises locks separated from one another by sealing curtains disposed transversely to the direction of travel of the glass band, characterized in that the apparatus comprises at least one nozzle pipe for blowing anti-flame gas, notably nitrogen, towards the base of the last curtain downstream of the last lock at the outlet from the float enclosure.

12. Float enclosure containing a reducing atmosphere of nitrogen and hydrogen at slight overpressure, the outlet of which comprises locks separated from one another by sealing curtains disposed transversely to the direction of travel of the glass band, characterized in that the enclosure comprises at least one lock downstream of at least one other lock, equipped with openings of small size in its walls, the size of said openings being sufficiently small for the reduction in overpressure caused by these openings not to be prejudicial to the functioning of the float enclosure.

13. Float enclosure according to claim 12, characterized in that the openings are formed in the walls of the lock furthest downstream.

14. Float according to one of claims 12 to 13, characterized in that the openings are formed through the lateral ends of the lock.

## FIG -1

## FIG -2

FIG-3